(19) Europäisches Patentamt
European Patent Office
Office européen des brevets

(11) **EP 0 997 326 A2**

(12) **EUROPÄISCHE PATENTANMELDUNG**

(43) Veröffentlichungstag:
03.05.2000 Patentblatt 2000/18

(51) Int. Cl.$^7$: **B60C 23/04**, B60C 23/06

(21) Anmeldenummer: 99121196.2

(22) Anmeldetag: 23.10.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **27.10.1998 DE 19849390**

(71) Anmelder:
**Continental Aktiengesellschaft**
**30165 Hannover (DE)**

(72) Erfinder: **Oldenettel, Holger**
**30826 Garbsen (DE)**

(54) **Verfahren zur Durchführung der Zuordnung von Luftdruckkontrollvorrichtungen zu Radpositionen in einem Luftdruckkontrollsystem eines Fahrzeuges**

(57) Die Erfindung betrifft ein Verfahren zur Durchführung der Zuordnung von Luftdruckkontrollvorrichtungen 4a bis 4d zu den Radpositionen in einem Luftdruckkontrollsystem eines Kraftfahrzeuges. Zur Durchführung des Verfahrens müssen in einer ersten Zentraleinheit 10 des Luftdruckkontrollsystems die Signale der Drehzahlsensoren 12a bis 12d eines Schlupfregelsystems ausgewertet werden. Die Drehzahlsensoren 12a bis 12 d übertragen das von ihnen erzeugte Signal zuerst an eine zweite Zentraleinheit 16

des Schlupfregelsystems und von dort werden sie über einen Datenbus 18 an die erste Zentraleinheit 10 übertragen, um dort ausgewertet zu werden. Durch diesen Datenübertragungsweg ist sichergestellt, daß das Luftdruckkontrollsystem die Funktionstüchtigkeit und die Sicherheit des Schlupfregelsystems nicht einschränkt. Die Erfindung betrifft ferner ein Kraftfahrzeug mit einem Luftdruckkontrollsystem, in dem das Verfahren durchgeführt werden kann.

## FIG. 1

EP 0 997 326 A2

**Beschreibung**

Die Erfindung betrifft ein Verfahren zur Durchführung der Zuordnung von Luftdruckkontrollvorrichtungen zu Radpositionen in einem Luftdruckkontrollsystem eines Kraftfahrzeuges gemäß dem Oberbegriff des Anspruchs 1. Die Erfindung betrifft ferner ein System gemäß dem Oberbegriff des Anspruchs 6, mit dem das Verfahren durchführbar ist.

Aus sicherheitstechnischen Gründen muß der Reifendruck von Kraftfahrzeugen regelmäßig überprüft werden, was von dem Kraftfahrzeugführer aus unterschiedlichen Gründen häufig versäumt wird. Deshalb sind bereits Luftdruckkontrollsysteme entwickelt worden, die jedem Rad zugeordnet, eine Luftdruckkontrollvorrichtung enthalten, die den Luftdruck der Kraftfahrzeugreifen automatisch messen und zumindest eine kritische Abweichung von einem Sollluftdruck dem Kraftfahrzeugführer melden. Die Luftdruckkontrollvorrichtungen können z. B. in den Reifen einvulkanisiert oder eingeklebt sein oder auch am oder im Ventil bzw. an oder in der Felge befestigt sein. Entsprechende Ausbildungen sind bekannt.

Aus der DE 196 18 658 A1 ist ein Luftdruckkontrollsystem bekannt, bei dem jedem Reifen des Kraftfahrzeuges jeweils eine Luftdruckkontrollvorrichtung zugeordnet ist. Jede Luftdruckkontrollvorrichtung übermittelt in regelmäßigen Abständen ein gemessenes Drucksignal zusammen mit einer individuellen Kennung an eine Zentraleinheit. Durch die Übermittlung einer individuellen Kennung wird vermieden, daß die an die Zentraleinheit übermittelten Daten beispielsweise mit Daten verwechselt werden, die von einem anderen Kraftfahrzeug ausgesendet werden. In der Zentraleinheit sind Wertepaare der Form (Kennung der Luftdruckkontrollvorrichtung/Radposition) für jedes Rad des Kraftfahrzeuges gespeichert, so daß durch entsprechenden Vergleich in der Zentraleinheit darauf geschlossen werden kann, welche Kennung mit dem dazugehörigen Drucksignal von welcher Radposition des Kraftfahrzeuges gesendet wird. Eine Abweichung des übermittelten Drucksignals von einem vorgegebenen Wert an eine Radpostition wird dem Kraftfahrzeugführer von der Zentraleinheit angezeigt, so daß dieser geeignete Maßnahmen einleiten kann.

Die Ausführungen zeigen, daß das aus der DE 196 18 658 A1 bekannte Luftdruckkontrollsystem nur dann einwandfrei funktionieren kann, wenn in der Zentraleinheit die Zuordnungen (kennung der Luftdruckkontrollvorrichtungen/Radposition) richtig gespeichert sind. Dementsprechend muß zumindest nach jeder Veränderung von Radpositionen (z. B. nach einem Reifenwechsel) am Kraftfahrzeug eine neue Zuordnung vorgenommen werden, was in einem Zuordnungsmodus des Luftdruckkontrollsystems geschieht. Bei dem aus der DE 196 18 658 A1 bekannten Luftdruckkontrollsystem wird eine neue Zuordnung durchgeführt, indem die Drehzahl an jeder Radposition des Kraftfahrzeuges durch zwei unabhängige Sensoren gemessen wird. Bei der ersten Art von Sensoren handelt es sich um die Drehzahlsensoren eines Schlupfregelsystems (z.B. eines Antiblockiersystems, im folgenden mit ABS-System abgekürzt), deren Radpositionen bekannt sind. Bei den zweiten Sensoren handelt es sich um Umdrehungssensoren, von denen jeweils einer Bestandteil einer Luftdruckkontrollvorrichtung ist. Mit den Sensoren werden im Zuordnungsmodus unabhängig voneinander die Drehzahlen der Kraftfahrzeugräder gemessen und die Kennung einer Luftdruckkontrollvorrichtung wird derjenigen Radposition zugeordnet, an der von einem Drehzahlsensor des Schlupfregelsystems und einem Umdrehungssensor die gleiche Drehzahl gemessen wurde.

Da es sich bei den Luftdruckkontrollvorrichtungen, denen die Umdrehungssensoren zugeordnet sind, lediglich um Sender handelt, die selbst keinerlei Daten empfangen können, kann an die Luftdruckkontrollvorrichtungen von der Zentraleinheit des Luftdruckkontrollsysems nicht die Information übermittelt werden, daß in dem Luftdruckkontrollsystem z.B. aufgrund eines Reifenwechsels eine neue Zuordnung durchgeführt werden muß. Die Luftdruckkontrollvorrichtungen in den Rädern des Kraftfahrzeuges „müssen also davon ausgehen", daß sich das Luftdruckkontrollsystem ständig im Zuordnungsmodus befindet. Aus diesem Grunde wird von den Umdrehungssensoren ständig die Umdrehungszahl der Räder gemessen und das aufgenommene Signal wird ständig verstärkt, damit es eine ausreichende Signalstärke aufweist. Das belastet die Batterien der Luftdruckkontrollvorrichtungen, wodurch deren Lebensdauer eingeschränkt wird.

Eine erwünschte Batterielebensdauer von mindestens 5 Jahren ist aufgrund dieser Belastung nur schwierig zu erreichen.

In der nachveröffentlichten deutschen Patentanmeldung mit dem Aktenzeichen 197 34 323 ist deshalb vorgeschlagen worden, mit Hilfe der den Luftdruckkontrollvorrichtungen zugeordneten Umdrehungssensoren zu einem ersten Zeitpunkt und zu einem zweiten späteren Zeitpunkt jeweils eine definierte Winkelposition des Kraftfahrzeugrades zu bestimmen. Es steht dann fest, daß das entsprechende Kraftfahrzeugrad zwischen dem ersten Zeitpunkt und dem zweiten Zeitpunkt eine ganzzahlige Anzahl von Umdrehungen gemacht hat. Die beiden Zeitpunkte werden der Zentraleinheit des Luftdruckkontrollsystems mitgeteilt, so daß auch diese „weiß", daß das entsprechende Kraftfahrzeugrad zwischen den beiden Zeitpunkten eine ganzzahlige Anzahl von Umdrehungen gemacht hat. Anhand der Signale der Drehzahlsensoren des Schlupfregelsystems bestimmt die Zentraleinheit dann, welches Rad in welcher Radposition eine ganzzahlige Anzahl von Umdrehungen gemacht hat. Die Kennung einer Luftdruckkontrollvorrichtung wird in der Zentraleinheit schließlich derjenigen Radposition zugeordnet, an der von einem Drehzahlsensor des Schlupfregelsystems zwischen dem ersten Zeitpunkt und dem zweiten Zeitpunkt eine ganzzahlige Anzahl von Umdrehungen gemessen wurde.

Die obigen Ausführungen zeigen, daß sowohl das aus der DE 196 18 658 A1 als auch das aus der nachveröffentlichten deutschen Patentanmeldung mit dem Aktenzeichen 197 34 323 bekannte Verfahren nur mit Hilfe der Signale der Drehzahlsensoren eines Schlupfregelsystems durchführbar ist. Aus diesem Grunde ist vorgesehen, jeden Drehzahlsensor über ein Kabel mit der Zentraleinheit des Luftdruckkontrollsystems zu verbinden. Es besteht die Gefahr, daß durch diese zusätzliche Verkabelung das Signal verfälscht wird. Da es sich bei den Drehzahlsensoren um sicherheitsrelevante Bestandteile eines Schlupfregelsystems handelt, ist eine derartige Verfälschung der Signale nicht hinnehmbar, da dann das gesamte Schlupfregelsystem falsch arbeiten könnte. Darüber hinaus entsteht durch die Verkabelung ein zusätzlicher Kostenaufwand, der die Kosten des Luftdruckkontrollsystems in die Höhe treibt.

Der Erfindung liegt die Aufgabe zugrunde, ein Verfahren zur Durchführung er Zuordnung von Luftdruckkontrollvorrichtungen zu Radpositionen in einem Luftdruckkontrollsystem eines Kraftfahrzeuges zu schaffen, in dem die Signale der Drehzahlsensoren eines Schlupfregelsystems genutzt werden können, ohne dessen Sicherheit einzuschränken. Der Erfindung liegt ferner die Aufgabe zugrunde, ein Kraftfahrzeug mit einem Luftdruckkontrollsystem zu schaffen, mit dem das Verfahren durchführbar ist.

Die Aufgabe wird durch die kennzeichnenden Merkmale des Anspruchs 1 und durch die kennzeichnenden Merkmale des nebengeordneten Anspruchs 6 gelöst.

Bei der zweiten Zentraleinheit handelt es sich bevorzugt um die Steuereinheit des Schlupfregelsystems. Es ist jedoch ebenfalls möglich, daß es sich bei der zweiten Zentraleinheit um eine separate Zentraleinheit handelt, die die Signale der Drehzahlsensoren des Schlupfregelsystems sowohl an dessen Steuereinheit als auch an die erste Zentraleinheit des Luftdruckkontrollsystems verteilt.

Die Vorteile der Erfindung sind insbesondere darin zu sehen, daß die Funktion des Schlupfregelsystems vollständig von der Funktion des Luftdruckkontrollsystems getrennt ist. Insbesondere werden die Signale der Drehzahlsensoren des Schlupfregelsystems nicht beeinflußt, da keine zusätzliche Verkabelung vorhanden ist, die von den Drehzahlsensoren zu der Zentraleinheit des Luftdruckkontrollsystems führt. Ein weiterer Vorteil der Erfindung ist darin zu sehen, daß es in der Zentraleinheit des Luftdruckkontrollsystems zu einer Störung bzw. zu einem Totalausfall kommen kann, ohne daß das Schlupfregelsystem davon beeinflußt wird. Die Sicherheit des Schlupfregelsystems ist also immer gewährleistet. Ein weiterer Vorteil der Erfindung ist schließlich darin zu sehen, daß sich die Kosten des Luftdruckkontrollsystems reduzieren, da keine Verkabelungen von den Drehzahlsensoren des Schlupfregelsystems zu der Zentraleinheit des Luftdruckkontrollsystems notwendig sind.

Gemäß einem ersten Ausführungsbeispiel der Erfindung nach Anspruch 2 wird die Zuordnung der Luftdruckkontrollvorrichtungen zu den Radpositionen wie folgt durchgeführt:

- eine Luftdruckkontrollvorrichtung überträgt zu einem zweiten Zeitpunkt eine individuelle Kennung zusammen mit der Anzahl der Umdrehungen an die erste Zentraleinheit, die das dieser Luftdruckkontrollvorrichtung zugeordnete Rad seit einem ersten Zeitpunkt gemacht hat
- die erste Zentraleinheit übermittelt über den Datenbus unmittelbar nach dem ersten und dem zweiten Zeitpunkt ein Aufforderungssignal an die zweite Zentraleinheit
- jeder Drehzahlsensor erzeugt ein zweites Signal, das die Umdrehung des ihm zugeordneten Rades kennzeichnet und übermittelt dies an die zweite Zentraleinheit
- in der zweiten Zentraleinheit wird aus den zweiten Signalen bestimmt, wieviel Umdrehungen die Räder zwischen den zwei Aufforderungssignalen bzw. zwischen dem ersten und dem zweiten Zeitpunkt gemacht haben
- die bestimmten Umdrehungen werden zusammen mit den zugehörigen Radpositionen von der zweiten Zentraleinheit über den Datenbus zu der ersten Zentraleinheit übertragen
- in der ersten Zentraleinheit wird die von der Luftdruckkontrollvorrichtung zum zweiten Zeitpunkt übertragene Anzahl von Umdrehungen der von der zweiten Zentraleinheit übertragenen Anzahl von Umdrehungen zugeordnet, mit der sie genügend übereinstimmt und anhand dieser Zuordnung wird die übermittelte individuelle Kennung einer Radposition zugeordnet
- die übrigen Luftdruckkontrollvorrichtungen werden in der gleichen Art und Weise den Radpositionen zugeordnet.

Unter genügender Übereinstimmung wird hier und im Folgenden verstanden, daß die von einer Luftdruckkontrollvorrichtung gemessene Anzahl von Umdrehungen mit der von einem Drehzahlsensor gemessenen Anzahl von Umdrehungen bis auf nicht zu vermeidende meßtechnische Ungenauigkeiten übereinstimmt.

Gemäß einem zweiten Ausführungsbeispiel der Erfindung wird die Zuordnung der Luftdruckkontrollvorrichtungen zu den Radpositionen wie folgt vorgenommen:

- eine Luftdruckkontrollvorrichtung überträgt zu einem ersten Zeitpunkt, in dem sich das der Luftdruckkontrollvorrichtung zugeordnete Rad in einer bestimmten Winkelposition befindet, seine individuelle Kennung an die erste Zentraleinheit

- die gleiche Luftdruckkontrollvorrichtung überträgt zu einem zweiten Zeitpunkt, in dem sich das der Luftdruckkontrollvorrichtung zugeordnete Rad in der gleichen Winkelposition wie zu dem ersten Zeitpunkt befindet, seine individuelle Kennung an die erste Zentraleinheit

- die erste Zentraleinheit leitet aus dem Empfang der Datensendungen ab, daß das der Luftdruckkontrollvorrichtung zugeordnete Rad zwischen dem ersten und dem zweiten Zeitpunkt eine ganzzahlige Anzahl von Umdrehungen gemacht hat

- jeder Drehzahlsensor erzeugt ein zweites Signal, das die Umdrehung des ihm zugeordneten Rades kennzeichnet und übermittelt dies an die zweite Zentraleinheit

- die zweite Zentraleinheit bestimmt in regelmäßigen zeitlichen Abständen aus jedem der zweiten Signale die Anzahl der Umdrehungen, die das entsprechende Rad zwischen den zeitlichen Abständen gemacht hat

- unmittelbar nach der Bestimmung übermittelt die zweite Zentraleinheit die bestimmte Anzahl zusammen mit der zugehörigen Radposition über den Datenbus an die erste Zentraleinheit, so daß dort für jede Radposition in regelmäßigen zeitlichen Abständen die Anzahl von Umdrehungen vorliegen, die das zu der Radposition gehörende Rad in einem Zeitintervall zwischen den zeitlichen Abständen gemacht hat

- aus den von der zweiten Zentraleinheit übermittelten Anzahlen wird in der ersten Zentraleinheit für jede Radposition die Anzahl von Umdrehungen bestimmt, die das Rad zwischen dem ersten und dem zweiten Zeitpunkt gemacht hat

- aus den bestimmten Drehzahlen wird in der ersten Zentraleinheit diejenige Radposition bestimmt, in der das Rad eine ganzzeilige Anzahl von Umdrehungen gemacht hat

- die von der Luftdruckkontrollvorrichtung übermittelte Kennung wird der zuvor bestimmten Radposition zugeordnet

- die übrigen Luftdruckkontrollvorrichtungen werden in der gleichen Art und Weise den Radpositionen zugeordnet.

Das zweite Ausführungsbeispiel der Erfindung hat gegenüber dem ersten Ausführungsbeispiel der Erfindung den Vorteil, daß lediglich Daten von der zweiten Zentraleinheit zu der ersten Zentraleinheit über den Datenbus übermittelt werden. Dementsprechend kann der Datenbus so ausgebildet werden, daß er Daten nur in einer Richtung übertragen kann. Der Aufwand und die Kosten für den Datenbus reduzieren sich dadurch erheblich. Ein weiterer Vorteil des zweiten Ausführungsbeispiels ist darin zu sehen, daß die zweite Zentraleinheit keine Daten von der ersten Zentraleinheit zu empfangen braucht. Dementsprechend kann die zweite Zentraleinheit in ihrer Funktion nicht von der ersten Zentraleinheit gestört werden.

Gemäß einer Weiterbildung des zweiten Ausführungsbeispiels nach Anspruch 4 wird aus den von der zweiten Zentraleinheit übermittelten Anzahlen in der ersten Zentraleinheit für jede Radposition die Anzahl von Umdrehungen, die das Rad zwischen dem ersten und dem zweiten Zeitpunkt gemacht hat, wie folgt bestimmt:

- in der ersten Zentraleinheit wird das erste Zeitintervall, in dem der erste Zeitpunkt liegt, und das letzte Zeitintervall, in dem der zweite Zeitpunkt liegt, bestimmt

- für die zwischen dem ersten und dem letzten Zeitintervall liegenden Zeitintervalle werden die Anzahlen von Umdrehungen, die in diesen Zeitintervallen gemacht wurden, aufaddiert

- die Anzahl der Umdrehungen, die von dem ersten Zeitpunkt bis zu dem Endzeitpunkt des ersten Zeitintervalls gemacht wurde, wird durch lineare Interpolation bestimmt

- die Anzahl der Umdrehungen, die von dem Anfangszeitpunkt des letzten Zeitintervalls bis zu dem zweiten Zeitpunkt gemacht wurde, wird durch lineare Interpolation bestimmt

- die Anzahl der Umdrehungen, die zwischen dem ersten Zeitpunkt und dem zweiten Zeitpunkt gemacht wurden, wird durch Aufaddieren der oben genannten Anzahlen bestimmt.

Der Vorteil dieser Weiterbildung ist darin zu sehen, daß die Anzahl von Umdrehungen, die die Räder zwischen dem ersten und dem zweiten Zeitpunkt gemacht haben, auf einfache Art und Weise ausreichend exakt bestimmt werden können.

Gemäß einer Weiterbildung der Erfindung nach Anspruch 5 betragen die regelmäßigen zeitlichen Abstände, in denen in der zweiten Zentraleinheit die Anzahl der Umdrehungen eines Rades bestimmt und an die erste Zentraleinheit übertragen werden, 5 Millisekunden bis 50 Millisekunden. Der Vorteil dieser Weiterbildung ist darin zu sehen, daß die Übertragung eines Datenblocks von der zweiten Zentraleinheit von der ersten Zentraleinheit über den Datenbus nur alle 5 Millisekunden bis 50 Millisekunden notwendig ist. Hierbei hat es sich gezeigt, daß regelmäßige zeitliche Abstände von 50 Millisekunden an sich ausreichend sind, da bereits in diesem Fall die oben genannte lineare Interpolation mit einer ausreichenden Genauigkeit durchzuführen ist. Selbstverständlich steigt die Genauigkeit des Interpolationsverfahrens an, wenn die regelmäßigen zeitlichen Abstände auf 5 Millisekunden verkürzt werden.

Ein Ausführungsbeispiel und weitere Vorteile der Erfindung werden im Zusammenhang mit den nachstehenden Figuren erläutert, darin zeigt:

Fig. 1      ein Kraftfahrzeug mit einem Luftdruckkontrollsystem in schematischer Darstellung

Fig. 2      ein Kraftfahrzeugrad mit einer Luftdruckkontrollvorrichtung und einem Umdrehungssensor

Fig. 3      ein Diagramm

Fig. 4      ein Diagramm

Fig. 5      ein Diagramm

Fig. 6      ein Diagramm

Fig. 7      ein Diagramm.

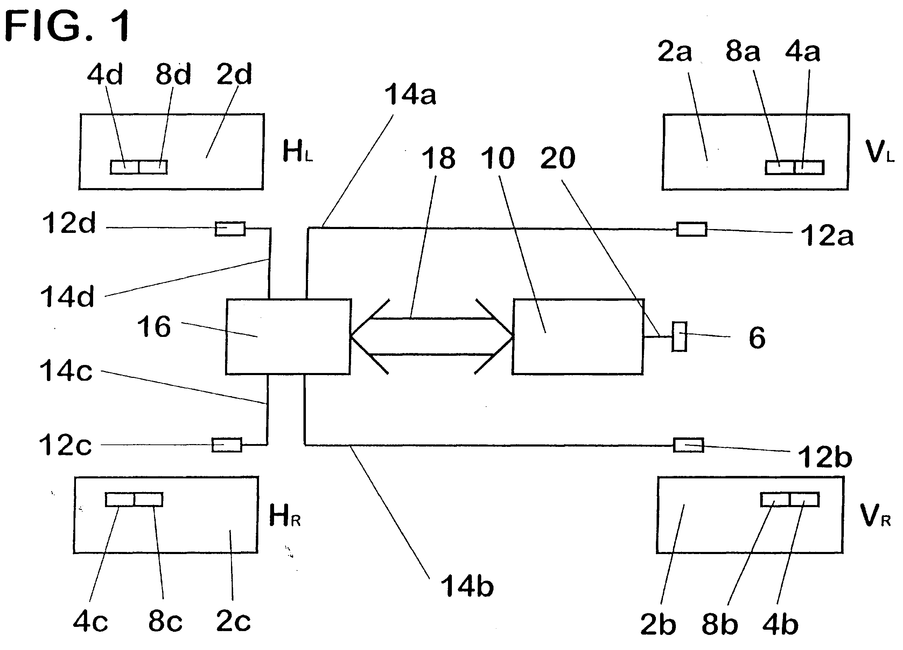

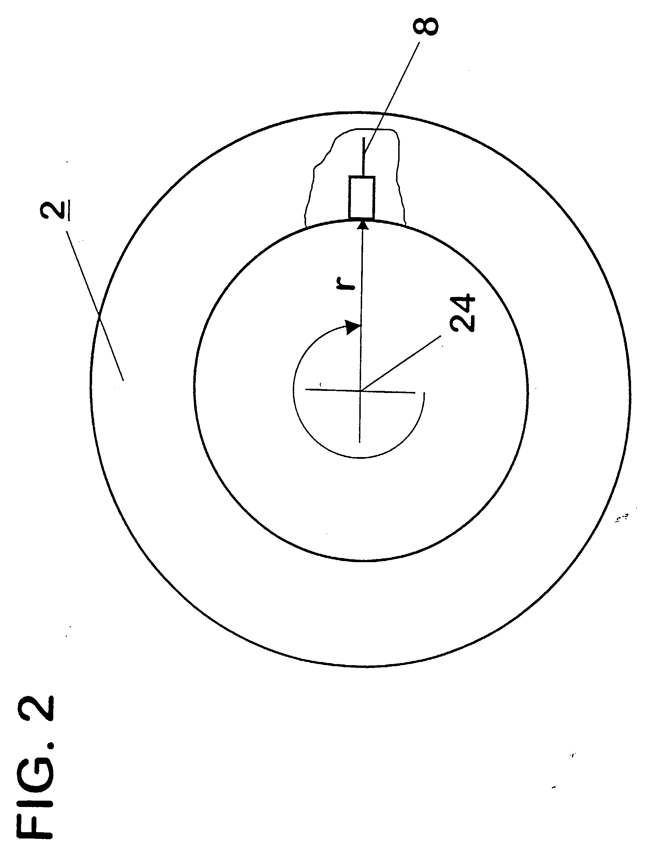

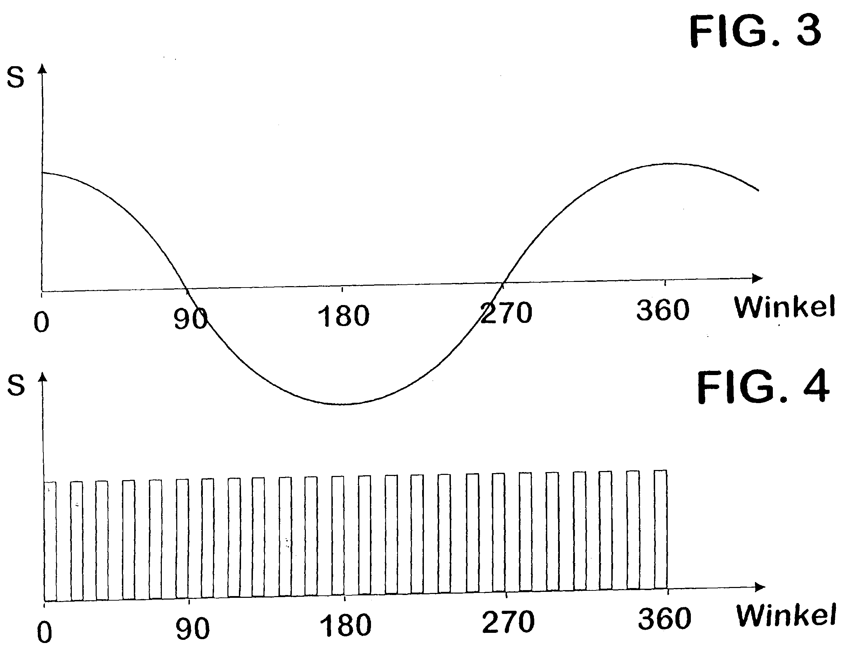

Figur 1 zeigt in stark schematisierter Darstellung ein Kraftfahrzeug mit Rädern 2a bis 2d, das über ein Luftdruckkontrollsystem verfügt. Das Luftdruckkontrollsystem enthält u. a. Luftdruckkontrollvorrichtungen 4a bis 4d, von denen jeweils eine in dem Reifen eines Kraftfahrzeugrades 2a bis 2d enthalten ist (z. B. im Reifengummi bzw. im oder am Ventil) oder von denen jeweils eine einem Reifen zugeordnet ist, z. B. durch entsprechende Positionierung und Befestigung an der Feige. Die Luftdruckkontrollvorrichtungen 4a bis 4d verfügen über einen Sender, mit dessen Hilfe sie Datentelegramme an einen Empfänger 6 berührungslos übertragen können. Darüber hinaus verfügen die Luftdruckkontrollvorrichtungen 4a bis 4d über Umdrehungssensoren 8a bis 8d, deren Funktionsweise im Zusammenhang mit den Figuren 2 und 3 erläutert ist. Der Empfänger 6 übermittelt die von den Luftdruckkontrollvorrichtungen 4a bis 4d empfangenen Datentelegramme über den Übertragungsweg 20 an die erste Zentraleinheit 10 des Luftdruckkontrollsystems. Im einfachsten Fall ist der Empfänger 6 als Empfangsantenne ausgebildet, mit deren Hilfe die erste Zentraleinheit 10 die übermittelten Datentelegramme empfängt.

Das Kraftfahrzeug enthält ferner Drehzahlsensoren 12a bis 12d, deren Funktionsweise im Zusammenhang mit der Fig. 4 erläutert wird und die an dem Kraftfahrzeug befestigt sind und jeweils einem Rad 2a bis 2d des Kraftfahrzeuges fest zugeordnet sind. Die Drehzahlsensoren 12a bis 12d sind Bestandteil eines Schlupfregelsystems, z. B. eines ABS-Systems, und stehen über Übertragungswege 14a bis 14d mit einer zweiten Zentraleinheit 16 des Schlupfregelsystems in Verbindung. Anhand der Übertragungawege 14a bis 14d kann die zweite Zentraleinheit 16 die von den Drehzahlsensoren übermittelten Signale der Radposition zuordnen. Liegt z.B. an dem Eingang des Übertragungsweges 14a ein Signal an, so „weiß" die zweite Zentraleinheit 16, daß dieses Signal von dem Drehzahlsensor 12a in der Radposition „vorne links" übertragen wird (in den Figuren ist die Radposition „vorne links" mit $V_L$, die Radposition „vorne rechts" mit $V_R$, die Radposition „hinten links" mit $H_L$ und die Radposition „hinten rechts" mit $H_R$ abgekürzt).

Die zweite Zentraleinheit 16 des Schlupfregelsystems ist über einen Datenbus 18 mit der ersten Zentraleinheit 10 des Luftdruckkontrollsystems verbunden. Beide Zentraleinheiten können z.B. als Mikroprozessoren ausgebildet sein. Über den Datenbus 18 werden die mit Hilfe der Drehzahlsensoren 12a bis 12d bestimmten Anzahlen der Umdrehungen der Räder 2a bis 2d zusammen mit der zugehörigen Radposition von der zweiten Zentraleinheit 16 zu der ersten Zentraleinheit 10 übertragen. Der Datenbus 18 ist beispielsweise als CAN-Bus ausgebildet. Je nach Ausführungsbeispiel der Erfindung ist der Datenbus 18 unterschiedlich ausgebildet. Müssen bei einem Ausführungsbeispiel der Erfindung Daten sowohl von der ersten Zentraleinheit 10 zur zweiten Zentraleinheit 16 als auch in umgekehrter Richtung übertragen werden, so ist der Datenbus 18 so ausgebildet, daß er Daten in beiden Richtungen übertragen kann. Ist bei einem Ausführungsbeispiel hingegen nur die Übertragung von Daten von der zweiten Zentraleinheit 16 zur ersten Zentraleinheit 10 notwendig, so wird der Datenbus so ausgebildet, daß er nur Daten in eine Richtung übertragen kann.

In der Zentraleinheit 10 liegen alle Daten vor, die für eine Zuordnung der Luftdruckkontrollvorrichtungen 4a bis 4d zu den Radpositionen notwendig sind. Innerhalb der Zentraleinheit 10 erfolgt die Zuordnung im wesentlichen genauso, wie es in der DE 196 18 658 A1 und in der nachveröffentlichten deutschen Patentanmeldung mit dem Aktenzeichen 197 34 323 beschrieben ist. Darüber hinaus wird das Zuordnungsverfahren nochmals im Zusammenhang mit den nachfolgenden Figuren erläutert.

Figur 2 zeigt ein Kraftfahrzeugrad 2 mit einem Umdrehungssensor 8, beispielsweise in Form eines Biegebalkens 8. Das Kraftfahrzeugrad 2 ist um die Achse 24 drehbar gelagert und der Biegebalken 8 ist in einem radialen Abstand r von der Achse 24 auf dem Kraftfahrzeug 2 angeordnet. Bei einer Rotation des Kraftfahrzeugrades 2 um die Achse 24 wird der Biegebalken 8 in Abhängigkeit von der Winkelposition des Kraftfahrzeugrades 2 durch die einwirkende Gravitationskraft unterschiedlich stark verbogen. Der Biegebalken kann z. B. aus piezoelektrischem Material aufgebaut sein und bei der Verbiegung des Biegebalkens wird in ihm eine elektrische Spannung erzeugt, deren Größe in einem eindeutigen Zusammenhang zu dem Ausmaß der Verbiegung des Balkens und somit zu der Winkelposition des Kraftfahrzeugrades 2 steht.

Im Zusammenhang mit der Figur 3 wird nun erläutert, wie mit Hilfe des auf dem Kraftfahrzeugrad 2 angeordneten Biegebalkens 8 bei einer Rotation des Kraftfahrzeugrades 2 um die Achse 24 ein Signal erzeugt wird. In dem Diagramm der Figur 3 ist das Signal über der Winkelposition aufgetragen, wobei die in der Figur 2 gezeigte Winkelposition 0° entsprechen soll. In der in der Figur 2 gezeigten Position des Biegebalkens 8 verläuft die Gravitationskraft g in Richtung der kraftempfindlichen Achse des Biegebalkens 8, so daß dieser eine maximale Verbiegung erfährt und somit bei der Winkelposition 0° ein maximales Signal erzeugt.

Wenn sich das Kraftfahrzeugrad 2 aus der in der Figur 2 gezeigten Position um 90° um die Achse 24 dreht, stehen die kraftempfindliche Achse des Biegebalkens 8 und die Gravitationskraft g senkrecht zueinander, so daß der Biegebalken 8 durch die Gravitationskraft g keinerlei Verformung erfährt und bei der Winkelposition 90° das von dem Biegebalken 8 erzeugte Signal somit verschwindet. Nach einer weiteren Drehung des Kraftfahrzeugrades 2 um weitere 90° verläuft die kraftempfindliche Achse des Biegebalkens 8 wiederum in Richtung der Gravitationskraft g, so daß dieser wiederum maximal verformt wird, wobei die Verformung jedoch nunmehr zu der Verformung, die sich in der Position, die die Figur 2 zeigt, ergibt, entgegengesetzt ist. Dementsprechend erzeugt der Biegebalken bei einer Winkelposition von 180° ein Signal, das den gleichen Betrag aufweist, wie bei einer Winkelposition von 0°, jedoch ein negatives Vorzeichen hat. Nach einer Drehung um weitere 90° steht die kraftempfindliche Achse des Biegebalkens 8 wiederum senkrecht auf der Gravitationskraft g, so daß vom Biegebalken 8 bei einer Winkelposition von 270° kein Signal erzeugt wird. Nach einer Drehung des Kraftfahrzeugrades 2 um die Achse 24 um weitere 90° wird wiederum die in der Figur 2 gezeigte Position des Biegebalkens 8 erreicht, so daß die kraftempfindliche Achse des Biegebalkens 8 wieder in Richtung der Gravitationskraft g verläuft, so daß der Biegebalken 8 wieder maximal verformt wird und bei einer Winkelposition von 360° bzw. 0° wieder ein maximales Signal erzeugt wird. Bei einer Rotation des Kraftfahrzeugrades 2 um die Drehachse 24 wird durch den Biegebalken 8 also ein periodisch verlaufendes Signal erzeugt. Die Anzahl der Perioden zwischen zwei Zeitpunkten entspricht der dabei der Anzahl der Umdrehungen des Rades zwischen diesen Zeitpunkten.

Figur 4 zeigt ein Diagramm, in dem das Signal, das von den Drehzahlsensoren 4a und 4d erzeugt und an die zweite Zentraleinheit 16 übertragen wird, über dem Winkel aufgetragen ist. Bei den Drehzahlsensoren 4a und 4d kann es sich beispielsweise um ABS-Sensoren handeln, die an sich bekannt sind und eine Zahnradscheibe mit einer gewissen Anzahl von Zähnen aufweisen. Bei einer vollen Umdrehung des Kraftfahrzeugrades 2 um die Achse 24 erzeugt jeder Zahn der Zahnradscheibe einen Impuls, so daß die Anzahl der Impulse in dem Winkelbereich von 0 bis 360° (also bei einer Umdrehung des Kraftfahrzeugrades) der Anzahl der Zähne entspricht. In der Figur 4 ist das Signal für einen ABS-Sensor gezeigt, dessen Zahnscheibe über 24 Zähne verfügt, so daß das Signal zwischen 0 und 360° 24 Impulse aufweist. Aus der Anzahl der Impulse zwischen zwei Zeitpunkten kann berechnet werden, wieviele Umdrehungen ein Rad zwischen den Zeitpunkten gemacht hat. Z. B. hat ein Rad zwischen zwei Zeitpunkten 100 Umdrehungen gemacht, wenn das Signal des Drehzahlsensors zwischen diesen beiden Zeitpunkten 2400 Impulse enthält (bei einer Zahnradscheibe mit 24 Zähnen). Aus der Anzahl der Impulse zwischen zwei Zeitpunkten kann auch der Winkelversatz des Rades zwischen diesen beiden Zeitpunkten bestimmt werden. Weist das von einem Drehzahlsensor zwischen den beiden Zeitpunkten erzeugte Signal , z. B. 2412 Impulse auf, so beträgt der Winkelversatz des Rades zwischen diesen beiden Zeitpunkten 180° (bei einer Zahnradscheibe mit 24 Zähnen).

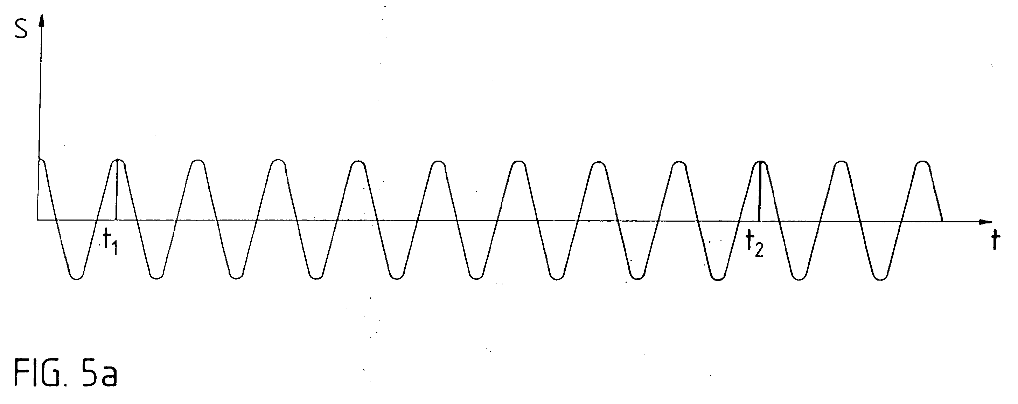

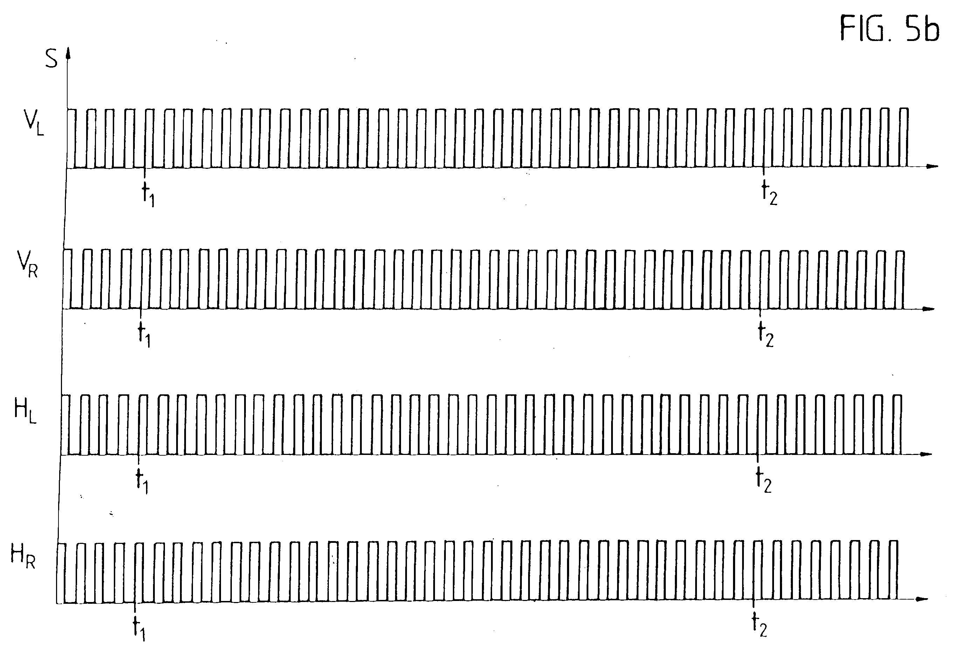

Im Zusammenhang mit der Figur 5 wird nun ein erstes Ausführungsbeispiel der Erfindung erläutert. In der Figur 5a ist das von einer Luftdruckkontrollvorrichtung 4a bis 4d erzeugte Signal S über der Zeit t aufgetragen. Die Luftdruckkontrollvorrichtung 4a bis 4d überträgt zu einem ersten Zeitpunkt $t_1$ ihre individuelle Kennung zusammen mit der Anzahl der Umdrehungen, die an dem Rad 2a bis 2d, dem die Luftdruckkontrollvorrichtung 4a bis 4d zugeordnet ist, gemacht wurde, an die erste Zentraleinheit 10. Zu einem zweiten Zeitpunkt $t_2$ überträgt die gleiche Luftdruckkontrollvorrichtung 4a bis 4d ihre individuelle Kennung zusammen mit der Anzahl der Umdrehungen, die das entsprechende Rad seit dem ersten Zeitpunkt $t_1$ gemacht hat, an die erste Zentraleinheit 10. Die Anzahl der Umdrehungen, die das entsprechende Rad zwischen den Zeitpunkten $t_1$ und $t_2$ gemacht hat, wird in der Luftdruckkontrollvorrichtung 4a bis 4d aus dem in der Figur 5 gezeigten Signal durch „Abzählen" der Perioden gewonnen.

Unmittelbar nach dem Empfang des ersten Datentelegramms zu dem ersten Zeitpunkt $t_1$ übermittelt die erste Zentraleinheit 10 über den Datenbus 18 ein Aufforderungssignal an die zweite Zentraleinheit 16. Ein weiteres Aufforderungssignal wird von der ersten Zentraleinheit 10 unmittelbar nach Empfang des zweiten Datentelegramms zu dem zweiten Zeitpunkt $t_2$ über den Datenbus 18 an die erste Zentraleinheit 16 übermittelt.

Figur 5b zeigt für jede Radposition das von den Drehzahlsensoren 12a bis 12d erzeugte Signal S aufgetragen über der Zeit t. Ein entsprechendes Signal liegt für jede Radposition in der zweiten Zentraleinheit 16 vor. Aus den Signalen wird in der zweiten Zentraleinheit 16 bestimmt, wieviel Impulse in jeder Radposition zwischen dem ersten Zeitpunkt $t_1$ und dem zweiten Zeitpunkt $t_2$ erzeugt worden sind. Die Anzahl der Impulse wird zusammen mit der entsprechenden Radposition von der zweiten Zentraleinheit 16 über den Datenbus 18 zu der ersten Zentraleinheit 10 übertragen.

In der ersten Zentraleinheit 10 wird aus der Anzahl der übertragenen Impulse die Anzahl der Umdrehungen für jede Radposition berechnet und mit der von der Luftdruckkontrollvorrichtung 4a bis 4d übermittelten Anzahl von Umdrehungen verglichen. Für eine bestimmte Radposition stimmt die von der Luftdruckkontrollvorrichtung 4a bis 4d übertragene Anzahl von Umdrehungen mit der von einem Drehzahlsensor 12a bis 12d gemessenen Anzahl von Umdrehungen überein. Die entsprechende Radposition wird in der Zentraleinheit 10 der von der Luftdruckkontrollvorrichtung 4a bis 4d übermittelten individuellen Kennung zugeordnet und die entsprechende Zuordnung wird dort abgespeichert. Die übrigen Luftdruckkontrollvorrichtungen werden in der gleichen Art und Weise der Radposition zugeordnet.

Beispiel: Die Luftdruckkontrollvorrichtung 4a überträgt zu dem zweiten Zeitpunkt $t_2$ ihre individuelle Kennung zusammen mit der Information, daß das entsprechende Rad seit dem ersten Zeitpunkt $t_1$ 100 Umdrehungen gemacht hat, an die erste Zentraleinheit 10. Die erste Zentraleinheit 10 „weiß" zu diesem Zeitpunkt noch nicht, von welcher Radposition das Datentelegramm übermittelt wurde. Zwischen dem ersten Zeitpunkt $t_1$ und dem zweiten Zeitpunkt $t_2$ werden ferner von dem Drehzahlsensor 12a 2400 Impulse, von dem Drehzahlsensor 12b 2448 Impulse, von dem Drehzahlsensor 12d 2472 Impulse und von dem Drehzahlsensor 12c 2520 Impulse an die zweite Zentraleinheit übermittelt (die unterschiedliche Anzahl von Impulsen kommt beispielsweise durch unterschiedliche Reifenabnutzung oder durch Kurvenfahrten zustande). Die zweite Zentraleinheit 16 übermittelt demzufolge an die erste Zentraleinheit 10 ein Datentelegramm mit dem folgenden Inhalt: 2400 Impulse an der Radposition „vorne links"; 2448 Impulse an der Radposition „vorne rechts"; 2472 Impulse an der Radposition „hinten links"; 2520 Impulse an der Radposition „hinten rechts".

In der ersten Zentraleinheit 10 wird aus dem Datentelegramm für jede Radposition die Anzahl der Umdrehungen zwischen dem ersten Zeitpunkt $t_1$ und dem zweiten Zeitpunkt $t_2$ berechnet, indem die Anzahl der Impulse durch die Anzahl der Zähne, die die Drehzahlsensoren aufweisen, geteilt wird. Für die Radposition „vorne links" ergeben sich 100, für die Radposition „vorne rechts" ergeben sich 102, für die Radposition „hinten links" ergeben sich 103 und für die Radposition „hinten rechts" ergeben sich 105 Umdrehungen (wobei angenommen wurde, daß die Drehzahlsensoren Zahnradscheiben mit 24 Zähnen enthalten). Die berechneten Anzahlen werden mit der von der Luftdruckkontrollvorrichtung 4a übermittelten Anzahl verglichen. Dieser Vergleich ergibt, daß die von der Luftdruckkontrollvorrichtung 4a übermittelte Anzahl von 100 Umdrehungen mit der von dem Drehzahlsensor 12a gemessenen Anzahl von Umdrehungen in der Radposition „vorne links" übereinstimmt. Die von der Luftdruckkontrollvorrichtung 4a übermittelte individuelle Kennung wird in der ersten Zentraleinheit 10 also der Radposition „vorne links" zugeordnet und die entsprechende Zuordnung wird dort gespeichert. Die Luftdruckkontrollvorrichtungen 4b, 4c und 4d werden in der gleichen Art und Weise den Radpositionen zugeordnet.

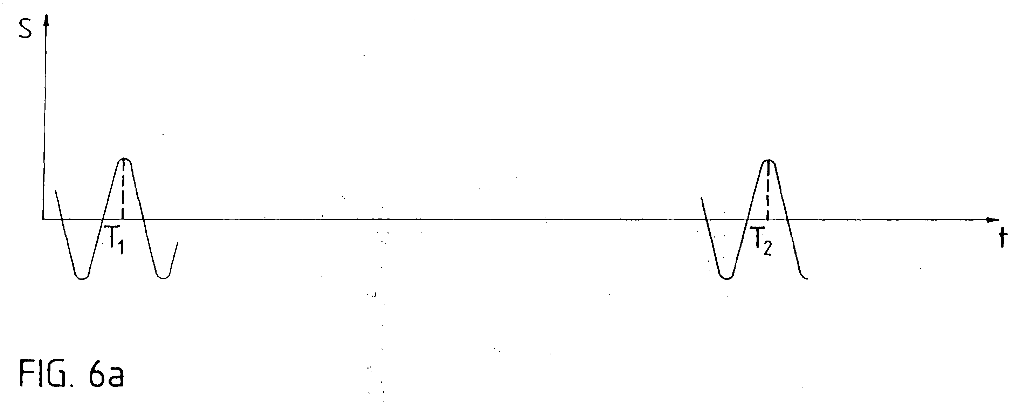

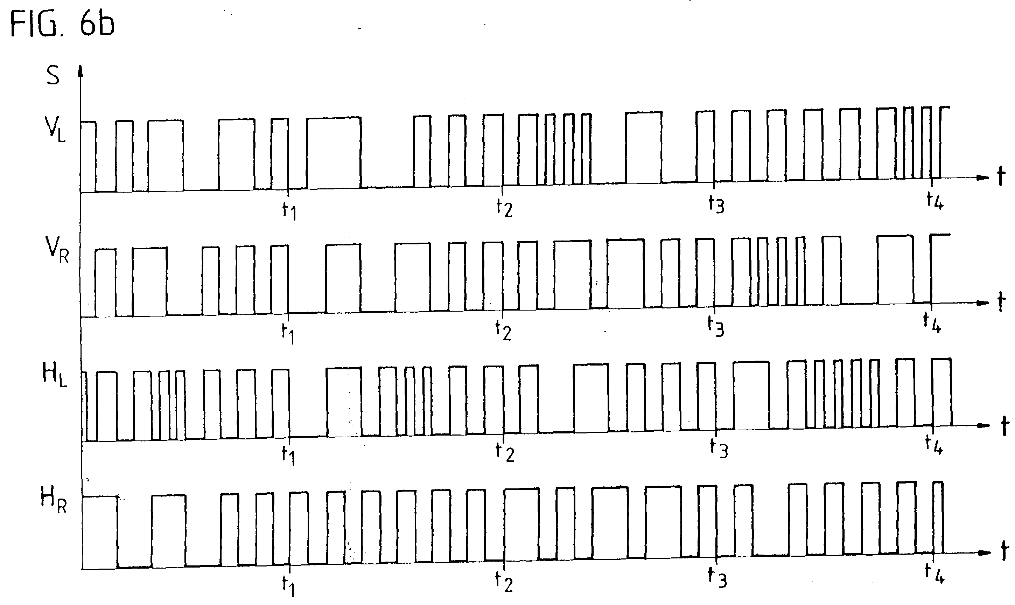

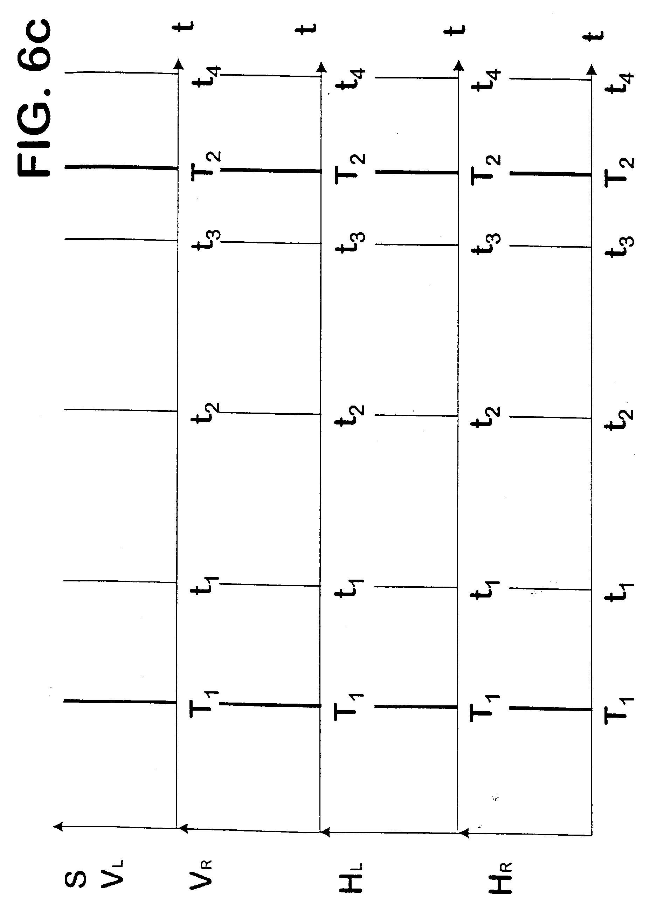

Ein weiteres Ausführungsbeispiel der Erfindung wird im Zusammenhang mit der Figur 6 erläutert. Figur 6a zeigt ein Diagramm, in dem das von einer Luftdruckkontrollvorrichtung 4a bis 4d erzeugte Signal S über der Zeit t aufgetragen ist. Das von dem Umdrehungssensor 8a bis 8d der Luftdruckkontrollvorrichtung 4a bis 4d erzeugte Signal wird zeitweise verstärkt und ausgewertet. Zu einem ersten Zeitpunkt $T_1$ nimmt das der Luftdruckkontrollvorrichtung 4a bis 4d zugeordnete Rad 2a bis 2d eine bestimmte Winkelposition ein, die von der Luftdruckkontrollvorrichtung 4a bis 4d z. B. daran erkannt werden kann, daß das Signal eine maximale Amplitude aufweist. Zu diesem ersten Zeitpunkt $T_1$ übermittelt die Luftdruckkontrollvorrichtung 4a bis 4d eine individuelle Kennung an die erste Zentraleinheit 10. Später wird das von dem Umdrehungssensor 8a bis 8d erzeugte Signal wiederum verstärkt und ausgewertet. Zu einem zweiten Zeitpunkt $T_2$ nimmt das der Luftdruckkontrollvorrichtung 4a bis 2d zugeordnete Rad 2a bis 2d wiederum die gleiche bestimmte Winkelposition ein, die wiederum daran erkannt wird, daß das Signal eine maximale Amplitude aufweist. Zu dem zweiten Zeitpunkt $T_2$ übermittelt die Luftdruckkontrollvorrichtung 4a bis 4d ihre individuelle kennung wiederum an die erste Zentraleinheit 10. Die erste Zentraleinheit 10 ist so programmiert, daß sie aus dem Empfang des ersten Datentelegramms zu dem ersten Zeitpunkt $T_2$ und dem Empfang des zweiten Datentelegramms zu dem zweiten Zeitpunkt $T_2$ schließt, daß das der Luftdruckkontrollvorrichtung 4a bis 4d zugeordnete Rad zwischen diesen beiden Zeitpunkten $T_1$ und $T_2$ eine ganzzahlige Anzahl von Umdrehungen gemacht hat.

In Figur 6b ist für jede Radposition das von den Drehzahlsensoren 12a bis 12d erzeugte Signal S über der Zeit t aufgetragen. Ein entsprechendes Diagramm liegt für jede Radposition in der zweiten Zentraleinheit 16 vor, da die Drehzahlsensoren 12a bis 12d ihr Signal an diese übertragen. Die zweite Zentraleinheit 16 wertet in regelmäßigen zeitlichen Abständen $t_1$, $t_2$, usw. aus, wieviele Impulse die Drehzahlsensoren 12a bis 12d in den Zeitintervallen zwischen den regelmäßigen zeitlichen Abständen erzeugt haben. Die regelmäßigen zeitlichen Abstände betragen vorzugsweise 5 Millisekunden bis 50 Millisekunden. Unmittelbar nachdem die zweite Zentraleinheit die Anzahl der Impulse in einem Zeitintervall bestimmt hat, wird diese Anzahl der Impulse zusammen mit der zugehörigen Radposition von der zweiten Zentraleinheit 16 über den Datenbus 18 zu der ersten Zentraleinheit 10 übertragen.

Die erste Zentraleinheit 10 empfängt also in regelmäßigen zeitlichen Abständen $t_1$, $t_2$ usw. eine Information darüber, wieviel Impulse in dem zurückliegenden Zeitintervall in welcher Radposition von den Drehzahlsensoren 12a bis 12d erzeugt worden sind. Dementsprechend liegt in der ersten Zentraleinheit 10 für jede Radposition ein Diagramm vor, wie es in der Figur 6c gezeigt ist. Die Bedeutung des Diagramms wird anhand der Radposition „vorne links" erläutert. Zu dem Zeitpunkt $t_1$ erhält die erste Zentraleinheit die Information, daß in der Radposition „vorne links" in dem Zeitintervall von t = 0 bis t = $t_1$ eine bestimmte Anzahl von Impulsen gemacht worden ist. Zu dem Zeitpunkt $t_2$ erhält die erste Zentraleinheit 10 die Information, daß in der Radposition vorne links in dem Zeitintervall von

t = $t_1$ bis t =$t_2$ eine bestimmte Anzahl von Impulsen erzeugt worden ist. Entsprechende Informationen enthält die erste Zentaleinheit zu den Zeitpunkten $t_3$ und $t_4$. Die erste Zentaleinheit 10 kann durch Addition der einzelnen Anzahlen berechnen, wieviel Impulse in der Radposition vorne links in dem Zeitbereich von t = 0 bis t = $t_4$ erzeugt worden sind.

Wie bereits erläutert, erhält die Zentraleinheit zu dem ersten Zeitpunkt $T_1$ und zu dem zweiten Zeitpunkt $T_2$ eine individuelle Kennung von einer der Luftdruckkontrollvorrichtungen 4a bis 4d. Die erste Zentraleinheit 10 schließt daraus, daß das entsprechende Rad zwischen den Zeitpunkten $T_1$ und $T_2$ eine ganzzahlige Anzahl von Umdrehungen gemacht hat, ohne zu wissen, in welcher Radposition dies geschah. Die Radposition wird von der ersten Zentraleinheit 10 wie folgt bestimmt: Zunächst wird in der ersten Zentraleinheit 10 das erste Zeitintervall, in dem der erste Zeitpunkt $T_1$ liegt und das letzte Zeitintervall, in dem der zweite Zeitpunkt $T_2$ liegt, bestimmt. Dies sind in der Figur 6c die Zeitintervalle von t = 0 bis t = $t_1$ bzw. von t = $t_3$ bis t = $t_4$. Für die zwischen dem ersten und dem letzten Zeitintervall liegenden Zeitintervalle werden die Anzahlen von den Umdrehungen, die in diesen Zeitintervallen gemacht wurden, für jede Radposition aufaddiert. Bei der Figur 6c wird also für jede Radposition die Anzahl der Umdrehungen aufaddiert, die in den Zeitintervallen von t = $t_1$ bis t = $t_2$ bzw. von t = $t_2$ bis t = $t_3$ gemacht wurden. Danach wird in der ersten Zentraleinheit die Anzahl der Impulse, die von dem ersten Zeitpunkt $T_1$ bis zu dem Endzeitpunkt $t_1$ des ersten Zeitintervalls gemacht wurde, durch lineare Interpolation bestimmt. Ferner wird die Anzahl der Umdrehungen, die von dem Anfangszeitpunkt $t_3$ des letzten Zeitintervalls bis zu dem zweiten Zeitpunkt $T_2$ gemacht wurde, ebenfalls in der ersten Zentraleinheit 10 durch lineare Interpolation bestimmt. Schließlich wird in der Zentaleinheit 10 für jede Radposition die Anzahl der erzeugten Impulse zwischen den Zeitpunkten $T_1$ und $T_2$ durch Aufaddieren der oben genannten einzelnen Anzahlen bestimmt. Aus der Anzahl der Impulse wird in der Zentaleinheit 10 für jede Radposition die Anzahl der Umdrehungen berechnet, die das Rad zwischen den Zeitpunkten $T_1$ und $T_2$ gemacht hat. Dazu wird die Anzahl der Impulse durch die Anzahl der Zähne der Zahnscheiben der Drehzahlsensoren 12a bis 12d dividiert. Schließlich wird überprüft, in welcher Radposition ein Rad eine ganzzahlige Anzahl von Umdrehungen gemacht hat. Die von der Luftdruckkontrollvorrichtung 4a bis 4d übertragene individuelle Kennung wird der Radposition zugeordnet, in der das Rad eine ganzzahlige Anzahl von Umdrehungen gemacht hat und die Zuordnung wird in der ersten Zentraleinheit 10 gespeichert. Die übrigen Luftdruckkontrollvorrichtungen 4a bis 4d werden in der gleichen Art und Weise der Radposition zugeordnet.

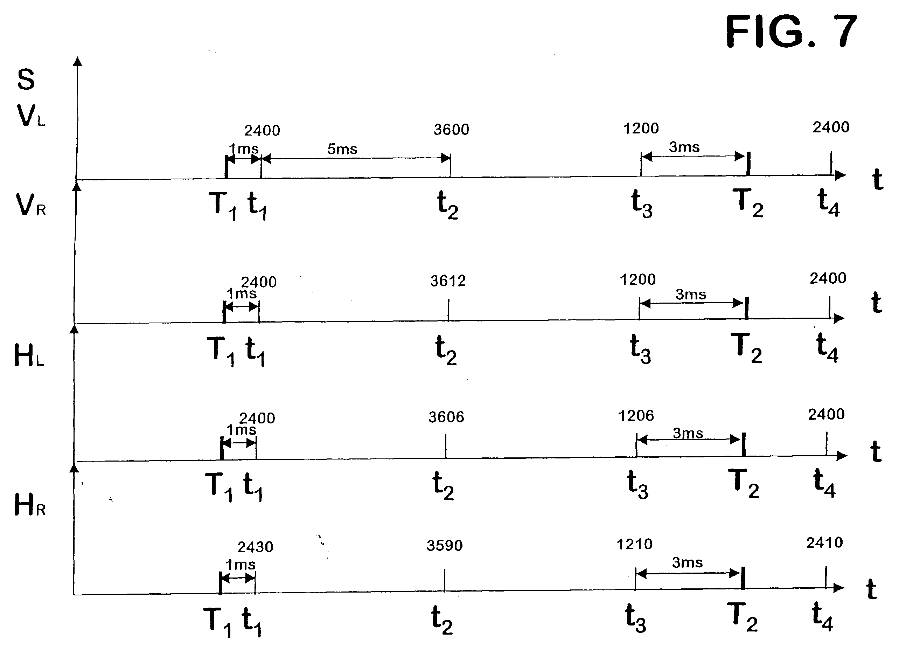

Beispiel anhand Fig. 7 (bei dem Beispiel wird davon ausgegangen, daß die Länge der Zeitintervalle 5 ms beträgt und daß eine Luftdruckkontrollvorrichtung in einem Abstand von ca. 20 ms die Datentelegramme an die erste Zentraleinheit überträgt. In den einzelnen Zeitintervallen werden unnatürlich hohe Umdrehungszahlen der Räder des Kraftfahrzeuges angenommen, um das Berechnungsprinzip zu verdeutlichen. In der Realität sind die Verhältnisse selbstverständlich vollkommen anders. Der Abstand zwischen zwei Datensendungen von einer Luftdruckkontrollvorrichtung zu der ersten Zentraleinheit beträgt ca. 15 Sekunden bis 120 Sekunden. Bei einem angenommenen Zeitabstand der Datensendungen von 30 Sekunden und bei einer angenommenen Länge der Zeitintervall von 50 ms liegen dann zwischen den beiden Datensendungen der Luftdruckkontrollvorrichtung ca. 600 Zeitintervalle. Wenn die Zeitintervalle nur eine Länge von 5 ms aufweisen, steigt die Anzahl der Zeitintervalle sogar auf ca. 6000 an. Das folgende Beispiel ist also insofern nicht „maßstabsgetreu".): Die erste Zentraleinheit 10 empfängt von der zweiten Zentraleinheit 16 für die Radposition vorne links zu dem Zeitpunkt $t_1$ die Information 2400, zu dem Zeitpunkt $t_2$ die Information 3600, zu dem Zeitpunkt $t_3$ die Information 1200 und zu dem Zeitpunkt $t_4$ die Information 2400. Dies bedeutet, daß in der Radposition vorne links in dem Zeitintervall t = 0 bis t = $t_1$ 2400 Impulse durch den Drehzahlsensor 12a erzeugt worden sind, der der Radposition vorne links zugeordnet ist. In dem Zeitintervall von t = $t_1$ bis t = $t_2$ sind 3600 Impulse, in dem Zeitintervall von t = $t_2$ bis t = $t_3$ 1200 Impulse und in dem Zeitintervall von t = $t_3$ bis t = $t_4$ 2400 Impulse erzeugt worden. Zu dem Zeitpunkt $T_1$ empfängt die erste Zentraleinheit 10 von der Luftdruckkontrollvorrichtung 4a eine individuelle Kennung. Der zeitliche Abstand von dem Zeitpunkt $T_1$ bis $t_1$ beträgt 1 ms. Zu dem Zeitpunkt $T_2$ empfängt die erste Zentraleinheit 10 wiederum die individuelle Kennung von der Luftdruckkontrollvorrichtung 4a. Der zeitliche Abstand von dem Zeitpunkt $t_3$ bis $T_2$ beträgt 3 ms. Die Anzahl der Impulse zwischen den Zeitpunkten $T_1$ und $T_2$ wird wie folgt berechnet: Zunächst wird in der ersten Zentraleinheit 10 bestimmt, daß der erste Zeitpunkt $T_1$ in dem Zeitintervall von t = 0 bis t = $t_1$ liegt. Danach wird durch lineare Interpolation in diesem Zeitintervall berechnet, daß von dem Zeitpunkt $T_1$ bis $t_1$ 480 Impulse erzeugt worden sind. Danach wird von der ersten Zentraleinheit das letzte Zeitintervall bestimmt, in dem der Zeitpunkt $T_2$ liegt. Dies ist bei dem gezeigten Ausführungsbeispiel das Zeitintervall von dem Zeitpunkt t = $t_3$ bis zu dem Zeitpunkt t = $t_4$.

In der ersten Zentraleinheit 10 wird dann durch lineare Interpolation in diesem Zeitintervall berechnet, daß von dem Zeitpunkt t = $t_3$ bis zu dem Zeitpunkt t = $T_2$ 1440 Impulse erzeugt worden sind. Danach werden in der ersten Zentraleinheit 10 für die zwischen dem ersten und dem letzten Zeitintervall liegenden Zeitintervalle die Anzahlen von Impulsen, die in diesen Zeitintervallen gemacht wurden, aufaddiert. In dem gezeigten Beispiel werden also die 3600 Impulse, die in dem Zeitintervall von $t = t_1$ bis $t = t_2$ gemacht wurden, zu den 1200 Impulsen, die in dem Zeitintervall von $t = t_2$ bis $t = t_2$ gemacht wurden, hinzu addiert, was 4800 Impulse ergibt. Schließlich wird die Gesamtzahl der Impulse zwischen den Zeitpunkten $t = T_1$ und $t = T_2$ für das gezeigte Beispiel zu 6720 Impulsen (480 Impulse + 4800 Impulse + 1440 Impulse) berechnet. Diese Anzahl der Impulse wird durch die Anzahl der Zähne der Zahnscheibe des Drehzahlsensors 12a dividiert. Geht man davon aus, daß die Anzahl der Zähne 24 beträgt, so ergeben sich für das genannte Beispiel 280 Umdrehungen, die zwischen den Zeitpunkten $T_1$ und $T_2$ in der Radposition vorne links gemacht wurden. Für die Radpositionen vorne rechts, hinten links und hinten rechts wird in analoger Art und Weise berechnet, daß die entsprechenden Räder zwischen den Zeitpunkten $T_1$ und $T_2$ jeweils 280,5 Umdrehungen gemacht haben. Die individuelle Kennung der Luftdruckkontrollvorrichtung 4a wird in der ersten Zentaleinheit 10 dementsprechend der Radposition vorne links zugeordnet, da nur in dieser Radposition zwischen den Zeitpunkten $T_1$ und $T_2$ eine ganzzahlige Anzahl von Umdrehungen gemacht wurde. Die entsprechende Zuordnung wird in der ersten Zentraleinheit 10 gespeichert. Die anderen Luftdruckkontrollvorrichtungen 4b, 4c und 4d werden den Radpositionen in analoger Art und Weise zugeordnet.

## Bezugszeichenliste

| | |
|---|---|
| 2a-2d | Räder |
| 4a - 4d | Luftdruckkontrollvorrichtungen |
| 6 | Empfänger |
| 8a - 8d | Umdrehungssensoren |
| 10 | erste Zentraleinheit |
| 12a - 12d | Drehzahlsensoren |
| 14a - 14d | Übertragungawege |
| 16 | zweite Zentraleinheit |
| 18 | Datenbus |
| 19 | Übertragungsweg |
| 22 | Kurve |
| 24 | Achse |

## Patentansprüche

1. Verfahren zur Durchführung der Zuordnung von Luftdruckkontrollvorrichtungen (4a bis 4d) zu Radpositionen in einem Luftdruckkontrollsystem eines Kraftfahrzeuges, das folgende Merkmale aufweist:

   - eine erste Zentraleinheit (10)
   - eine Anzahl von Rädern (2a bis 2d), wobei jedem Rad (2a bis 2d) eine Luftdruokkontrollvorrichtung (4a bis 4d) mit einem Umdrehungssensor (8a bis 8d) zugeordnet ist
   - Drehzahlsensoren (12a bis 12d), von denen

jeweils einer einem Rad (2a bis 2d) des Kraftfahrzeuges ortsfest zugeordnet ist, wobei die Zuordnung der Drehzahlsensoren (12a bis 12d) zu den Radpositionen der ersten Zentraleinheit (10) bekannt ist

in folgenden Verfahrensschritten:

   - jede Luftdruckkontrollvorrichtung (4a bis 4d) überträgt in zeitlichen Abständen eine individuelle Kennung zusammen mit einem ersten Signal an die erste Zentraleinheit (10), das die Umdrehung des Rades kennzeichnet
   - jeder Drehzahlsensor (12a bis 12d) erzeugt ein zweites Signal, das die Umdrehung des ihm zugeordneten Rades (2a bis 2d) kennzeichnet
   - an die erste Zentraleinheit (10) werden zusammen mit den zugehörigen Radpositionen dritte Signale übertragen, die aus den zweiten Signalen der Drehzahlsensoren (12a bis 12d) gewonnen werden und die Umdrehungen der Räder (2a bis 2d) kennzeichnen
   - in der ersten Zentraleinheit (10) wird jedes von einer Luftdruckkontrollvorrichtung (4a bis 4d) übertragene erste Signal einem dritten Signal zugeordnet, zu der es in einer vorbestimmten Beziehung steht und anhand der zuvor getroffenen Zuordnung wird jede übermittelte individuelle Kennung einer Radposition zugeordnet **dadurch gekennzeichnet,** daß
   - jeder Drehzahlsensor (12a bis 12d) das von ihm erzeugte zweite Signal an eine zweite Zentraleinheit (16) des Kraftfahrzeuges überträgt, in der aus den zweiten Signalen die dritten Signale gewonnen werden und daß
   - die zweite Zentraleinheit (16) über einen Datenbus (18) mit der ersten Zentraleinheit (10) verbunden ist, über den die dritten Signale von der zweiten Zentraleinheit (16) zu der ersten Zentraleinheit (10) übertragen werden.

2. Verfahren nach Anspruch 1, dadurch gekennzeichnet, daß folgende Verfahrensschritte durchgeführt werden:

   - eine Luftdruckkontrollvorrichtung (4a bis 4d) überträgt zu einem zweiten Zeitpunkt $t_2$ eine individuelle Kennung zusammen mit der Anzahl der Umdrehungen an die erste Zentraleinheit (10), die das dieser Luftdruckkontrollvorrichtung zugeordnete Rad (2a bis 2d) seit einem ersten Zeitpunkt $t_1$ gemacht hat
   - die erste Zentraleinheit (10) übermittelt über den Datenbus (18) unmittelbar nach dem ersten Zeitpunkt $t_1$ und dem zweiten Zeitpunkt $t_2$ ein Aufforderungssignal an die zweite Zentraleinheit (16)
   - jeder Drehzahlsensor (12a bis 12d) erzeugt ein zweites Signal, das die Umdrehung des ihm zugeordneten Rades (2a bis 2d) kennzeichnet und übermittelt dies an die zweite Zentraleinheit (16)

- in der zweiten Zentraleinheit (16) wird aus den zweiten Signalen bestimmt, wieviel Umdrehungen die Räder (2a bis 2d) zwischen den zwei Aufforderungssignalen bzw. zwischen dem ersten Zeitpunkt $t_1$ und dem zweiten Zeitpunkt $t_2$ gemacht haben
- die bestimmten Umdrehungen werden zusammen mit dem zugehörigen Radpostitionen von der zweiten Zentraleinheit (16) über den Datenbus (18) zu der ersten Zentraleinheit (10) übertragen
- in der ersten Zentraleinheit (10) wird die von der Luftdruckkontrollvorrichtung (4a bis 4d) zum zweiten Zeitpunkt $t_2$ übertragene Anzahl von Umdrehungen der von der zweiten Zentraleinheit (16) übertragenen Anzahl von Umdrehungen zugeordnet, mit der sie genügend übereinstimmt und anhand dieser Zuordnung wird die übermittelte individuelle Kennung einer Radposition zugeordnet
- die übrigen Luftdruckkontrollvorrichtungen (4a bis 4d) werden in der gleichen Art und Weise den Radpositionen zugeordnet.

3. Verfahren nach Anspruch 1, dadurch gekennzeichnet, daß folgende Verfahrensschritte durchgeführt werden:

- eine Luftdruckkontrollvorrichtung (4a bis 4d) überträgt zu einem ersten Zeitpunkt $T_1$, in dem sich das der Luftdruckkontrollvorrichtung (4a bis 4d) zugeordnete Rad in einer bestimmten Winkelposition befindet, seine individuelle Kennung an die erste Zentraleinheit (10)
- die gleiche Luftdruckkontrollvorrichtung (4a bis 4d) überträgt zu einem zweiten Zeitpunkt $T_2$, in dem sich das der Luftdruckkontrollvorrichtung (4a bis 4d) zugeordnete Rad in der gleichen Winkelposition wie zu dem ersten Zeitpunkt $T_1$ befindet, seine individuelle Kennung an die erste Zentraleinheit (10)
- die erste Zentraleinheit (10) leitet aus dem Empfang der Datensendungen ab, daß das der Luftdruckkontrollvorrichtung (4a bis 4d) zugeordnete Rad zwischen dem ersten $T_1$ und dem zweiten Zeitpunkt $T_2$ eine ganzzahlige Anzahl von Umdrehungen gemacht hat
- jeder Drehzahlsensor (12a bis 12d) erzeugt ein zweites Signal, daß die Umdrehung des ihm zugeordneten Rades (2a bis 2d) kennzeichnet und übermittelt dies an die zweite Zentraleinheit (16)
- die zweite Zentraleinheit (16) bestimmt in regelmäßigen zeitlichen Abständen aus jedem der zweiten Signale die Anzahl der Umdrehungen, die das entsprechende Rad (2a bis 2d) zwischen den zeitlichen Abständen gemacht hat

- unmittelbar nach der Bestimmung übermittelt die zweite Zentraleinheit (16) die bestimmte Anzahl zusammen mit der zugehörigen Radposition über den Datenbus (18) an die erste Zentraleinheit (10), so daß dort für jede Radposition in regelmäßigen zeitlichen Abständen die Anzahl von Umdrehungen vorliegen, die das zu der Radposition gehörende Rad (2a bis 2d) in einem Zeitintervall zwischen den zeitlichen Abständen gemacht hat
- aus den von der zweiten Zentraleinheit (16) übermittelten Anzahlen wird in der ersten Zentraleinheit (10) für jede Radposition die Anzahl der Umdrehungen bestimmt, die das zugehörige Rad (2a bis 2d) zwischem dem ersten $T_1$ und dem zweiten Zeitpunkt $T_2$ gemacht hat
- aus den bestimmten Drehzahlen wird in der ersten Zentraleinheit (10) diejenige Radposition bestimmt, in der das Rad eine ganzzahlige Anzahl von Umdrehungen gemacht hat
- die von der Luftdruckkontrollvorrichtung (4a bis 4d) übermittelte Kennung wird der zuvor bestimmten Radposition zugeordnet
- die übrigen Luftdruckkontrollvorrichtungen (4a bis 4d) werden in der gleichen Art und Weise den Radpositionen zugeordnet.

4. Verfahren nach Anspruch 3, dadurch gekennzeichnet, daß aus den von der zweiten Zentraleinheit (16) übermittelten Anzahlen in der ersten Zentraleinheit (10) für jede Radposition die Anzahl von Umdrehungen, die das Rad zwischen dem ersten $T_1$ und dem zweiten Zeitpunkt $T_2$ gemacht hat, wie folgt bestimmt wird:

- in der ersten Zentraleinheit (10) wird das erste Zeitintervall, in dem der erste Zeitpunkt $T_1$ liegt, und das letzte Zeitintervall, in dem der zweite Zeitpunkt $T_2$ liegt, bestimmt
- für die zwischen dem ersten und dem letzten Zeitintervall liegenden Zeitintervalle werden die Anzahlen von Umdrehungen, die in diesen Zeitintervallen gemacht wurden, aufaddiert
- die Anzahl der Umdrehung, die von dem ersten Zeitpunkt $T_1$ bis zu dem Endzeitpunkt des ersten Zeitintervalls gemacht wurde, wird durch lineare Interpolation bestimmt
- die Anzahl der Umdrehungen, die von dem Anfangszeitpunkt des letzten Zeitintervalls bis zu dem zweiten Zeitpunkt $T_2$ gemacht wurde, wird durch lineare Interpolation bestimmt
- die Anzahl der Umdrehungen, die zwischen dem ersten Zeitpunkt $T_1$ und dem zweiten Zeitpunkt $T_2$ gemacht wurden, wird durch Aufaddieren der oben genannten Anzahlen bestimmt.

**5.** Verfahren nach einem der Ansprüche 3 bis 4, dadurch gekennzeichnet, daß die regelmäßigen zeitlichen Abstände, in denen in der zweiten Zentraleinheit (16) die Anzahl der Umdrehung eines Rades (2a bis 2d) bestimmt und an die erste Zentraleinheit (10) übertragen wird, 5 ms bis 50 ms betragen.

**6.** Kraftfahrzeug zur Durchführung der Zuordnung von Luftdruckkontrollvorrichtungen (4a bis 4d) zu Radpositionen in einem Luftdruckkontrollsystem eines Kraftfahrzeuges, das folgende Merkmale aufweist:

- eine erste Zentraleinheit (10)
- eine Anzahl von Rädern (2a bis 2d), wobei jedem Rad (2a bis 2d) eine Luftdruckkontrollvorrichtung (4a bis 4d) mit einem Umdrehungssensor (8a bis 8d) zugeordnet ist
- Drehzahlsensoren (12a bis 12d), von denen jeweils einer einem Rad (2a bis 2d) des Kraftfahrzeuges ortsfest zugeordnet ist, wobei die Zuordnung der Drehzahlsensoren (12a bis 12d) zu den Radpositionen der ersten Zentraleinheit (10) bekannt ist

  wobei in dem Luftdruckkontrollsystem die Zuordnung in folgenden Verfahrensschritten durchgeführt wird::
- jede Luftdruckkontrollvorrichtung (4a bis 4d) überträgt in zeitlichen Abständen eine individuelle Kennung zusammen mit einem ersten Signal an die erste Zentraleinheit (10), das die Umdrehung des Rades kennzeichnet
- jeder Drehzahlsensor (12a bis 12d) erzeugt ein zweites Signal, das die Umdrehung des ihm zugeordneten Rades (2a bis 2d) kennzeichnet
- an die erste Zentraleinheit (10) werden zusammen mit den zugehörigen Radpositionen dritte Signale übertragen, die aus den zweiten Signalen der Drehzahlsensoren (12a bis 12d) gewonnen werden und die Umdrehungen der Räder (2a bis 2d) kennzeichnen
- in der ersten Zentraleinheit (10) wird jedes von einer Luftdruckkontrollvorrichtung (4a bis 4d) übertragene erste Signal einem dritten Signal zugeordnet, zu der es in einer vorbestimmten Beziehung steht und anhand der zuvor getroffenen Zuordnung wird jede übermittelte individuelle Kennung einer Radposition zugeordnet, dadurch gekennzeichnet, daß
- das Kraftfahrzeug eine zweite Zentraleinheit (16) enthält, an die jeder Drehzahlsensor (12a bis 12d) das von ihm erzeugte zweite Signal überträgt und in der aus den zweiten Signalen die dritten Signale gewonnen werden und daß die zweite Zentraleinheit (16) über einen Datenbus (18) mit der ersten Zentraleinheit (10) verbunden ist, über den die dritten Signale von der zweiten Zentraleinheit (16) zu der ersten Zentraleinheit (10) übertragen werden.

FIG. 1

FIG. 2

FIG. 3

FIG. 4

EP 0 997 326 A2

FIG. 5a

FIG. 5b

FIG. 6a

FIG. 6b

S

$V_L$

$t_1$　$t_2$　$t_3$　$t_4$　t

$V_R$

$t_1$　$t_2$　$t_3$　$t_4$　t

$H_L$

$t_1$　$t_2$　$t_3$　$t_4$　t

$H_R$

$t_1$　$t_2$　$t_3$　$t_4$　t

EP 0 997 326 A2

FIG. 6c

EP 0 997 326 A2

FIG. 7

EP 0 997 326 A2